# EUROPEAN PATENT SPECIFICATION

(11) **EP 0 615 865 B1**
(45) Date of publication and mention of the grant of the patent: **30.10.1996**
(21) Application number: 94103896.0
(22) Date of filing: 14.03.1994
(51) Int. Cl.: B60B 21/12

(54) **Sealing device for tubeless tyres mounted on spoke wheels**
Abdichtungsvorrichtung für Speicherräder mit schlauchlosen Reifen
Dispositif d'étanchéité pour roues à rayons à bandages pneumatiques sans chambre à air

(30) Priority: 15.03.1993 ES 9300666
(43) Date of publication of application: 21.09.1994
(73) Proprietor: Nadal Aloy, Jorge, E-08960 Sant Just Desvern (Barcelona) (ES)
(72) Inventor: Nadal Aloy, Jorge, E-08960 Sant Just Desvern (Barcelona) (ES)
(74) Representative: Petruzziello, Aldo

(56) References cited:
- DE-A- 3 715 669
- DE-A- 3 727 051
- FR-A- 2 426 579
- US-A- 3 008 770

## Description

The present application refers to a sealing device for tubeless tyres mounted on spoke wheels.

More particularly, a rim, rubber and tyre unit has been designed in the invention, to allow tube removal in the bicycle spoke wheels.

The Spanish utility model No.8600785 of the same applicant is presently already known. This model comprises an improved rim profile by which tubeless tyres can be fitted in the motorcycle wheels provided with spokes.

This is achieved by devising an external peripheral fluting located at the profile center and whose defining edges have an elastic belt sealingly fitted thereon, sealing the communication with the outside through the spoke tensioning nut heads.

Although said prior registration tries to overcome the problem of obtaining bicycle tubeless wheels, there is the disadvantage that to be operative, perfectly finished rims and also those types of rims obtained by welding of the ends to close the ring had to he used. Otherwise, air leakages would probably be caused.

With the device of this invention, all these disadvantages derived from an ill-finished rim, such as internal roughness, are fully overcome and this device is also allowing to use cost-effective rims, such as those being end-joined with dovetailed members, however without any welding.

The device being the object of the present invention, because of its perfect initial sealing also allows the tyre to be inflated with the conventional air pump, a thing not even possible with the prior system.

Essentially, the surprising sealing obtained with the device of the present invention is characterised by the fact that the sealing between the tyre and the rigidly finished rim structure is made by rubber to rubber contact, without any other material taking part.

Although the device of the invention has mainly been evidently designed for bicycle wheels, it is also applicable with the same efficiency to any other wheels devised to be tubeless and which may have air leakage problems.

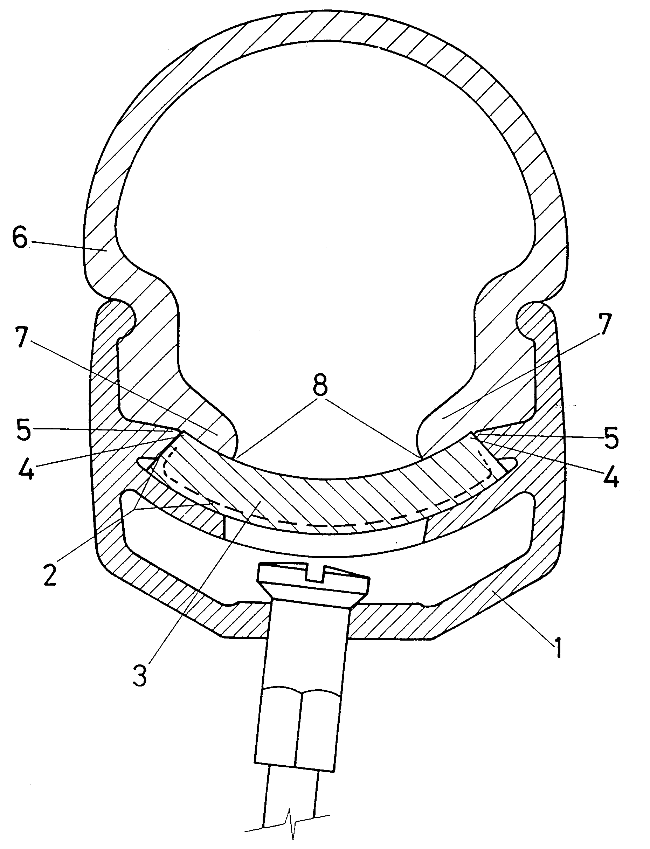

To arrive at a more detailed description of the invention, reference will be made to the attached figure showing a preferred embodiment, only by way of a non-exhaustive example.

The single figure shows a cross-sectioned profile view of the invention unit, wherein a rim 1 is provided with a fluting 2, preferably "dovetailed", a rubber band 3 is housed therein, the top ends 4 of the band being levelled to the upper portion of the internal projections 5 of the rim 1.

These internal projections 5 make up the seat of the beads 7 of a tubeless tyre 6, which beads 7 have been oversized in a way that the sealing of said tyre 6 is made by the pressure of the bead toe 8 of the oversized bead 7 upon the ends 4 of the rubber band 3 incorporated into the fluting 2 of the rim 1.

## Claims

1. Sealing device for tubeless tyres mounted on spoke wheels of the type where the rim (1) is provided with a fluting (2) to receive a rubber band (3), characterised in that the fluting (2) has substantially a "dovetailed" shape and is fully stuffed with the rubber band (3) so as to form a substantially levelled and smooth top surface with projections (5) internally projecting from the rim (1), and making up the seat of beads (7) of a tyre (6), and in that said beads (7) are oversized so that they are partially seating on the top side of the rubber band ends, causing thus, while inflating the tyre (6), a pressure of the oversized beads (7) upon the rubber band (3), providing thereby a complete tyre sealing independently of any flaws, recesses or openings which the rim (1) might have.

## Patentansprüche

1. Dichtungssvorrichtung für Reifen ohne Luftschlauch, die auf Speichenräder montiert werden, deren Felge (1) mit einer Nut (2) versehen ist, die zur Aufnahme eines Gummistreifens (3) dient, dadurch gekennzeichnet, daß die Nut (2) im wesentlichen "schwalbenschwanz"-förmig ist und vollständig durch den Gummistreifen (3) gefüllt wird, wodurch eine grundlegend gleichförmige und ebene Oberfläche entsteht, die Fortsätze (5) aufweist, die an der Innenseite aus der Felge (1) herausragen und den Sitz für Rippen (7) eines Reifens (6) bilden; die Vorrichtung ist ferner dadurch gekennzeichnet, daß die genannten Rippen (7) derart vergrößert sind, daß sie teilweise auf dem oberen Rand der Enden des Gummistreifens aufliegen, so daß beim Aufpumpen des Reifens (6) einen Druck der vergrößerten Rippen (7) auf den Gummistreifen (3) verursacht wird, wodurch der Reifen vollkommen dicht verschlossen wird, unabhängig von Unvollkommenheiten, Hohlräumen oder Öffnungen, die die Felge (1) eventuell aufweisen könnte.

## Revendications

1. Dispositif de scellement pour pneus sans chambre à air montés sur des roues à bras du type sur lequel la couronne (1) est équipée d'une rainure (2) pour recevoir une bande en caoutchouc (3), caractérisé par le fait que la rainure (2) présente substantiellement une forme "en queue d'hirondelle" et qu'elle est totalement remplie par la bande en caoutchouc (3), de manière à former une surface supérieure substantiellement uniforme et plate ayant des projections (5) dépassant intérieurement de la couronne (1) et qui forment le siège de nervures (7) d'un pneu (6), et par le fait que ces nervures (7) sont majorées de manière à reposer partiellement sur le côté supérieur des extrémités de la bande en caoutchouc, en provoquant ainsi, lorsqu'on gonfle le pneu (6), une pression des nervures majorées (7) sur la bande en caoutchouc (3), ce qui assure ainsi un scellement complet du caoutchouc, indépendamment de toute imperfection, cavité ou ouverture que la couronne (1) pourrait avoir.
